# EUROPEAN PATENT APPLICATION

(11) **EP 2 660 785 A2**
(43) Date of publication of application: **06.11.2013**
(21) Application number: 13166453.4
(22) Date of filing: 03.05.2013
(51) Int. Cl.: G07C 9/00

(54) **Charging and communication device**

(30) Priority: 04.05.2012 SE 1250456
(71) Applicant: SE Development AB, 650 02 Karlstad (SE)
(72) Inventor: Gustafsson, Niclas, 662 35 ÅMÅL (SE); Andersson, Andreas, 662 30 ÅMÅL (SE)
(74) Representative: Johansson, Lars E.

(57) **Abstract**

A charging and communication unit comprising a primary circuit board (1) and a secondary circuit board (2), said circuit boards (1, 2) being disposed in a respective one of two interacting parts (90, 91) of a device, said parts (90, 91) being movably disposed relative to each other, wherein a first part (91) is supplied with power by an external source, whereas a second part (90) is inductively supplied with power via said first part (91), wherein said primary circuit board (1) interacts with a primary coil (3) and said secondary circuit board (2) interacts with a secondary coil (4) for inductive transfer of electrical energy between the circuit boards (1, 2) via said primary (3) and secondary coil (4), wherein said primary (3) and secondary coil (4) are also adapted to inductively transfer bidirectional data communication between said circuit boards (1, 2).

## Description

### TECHNICAL FIELD

The present invention relates to a charging and communication unit, comprising a primary circuit board and a secondary circuit board, said circuit boards being disposed in a respective one of two interacting parts of a device, said parts being movably disposed relative to each other, wherein a first part is supplied with power by an external source, whereas a second part is inductively supplied with power via said first part, wherein said primary circuit board interacts with a primary coil and said secondary circuit board interacts with a secondary coil for inductive transfer of electrical energy between the circuit boards via said primary and secondary coil, and an electric lock comprising said charging and communication unit. Furthermore, the invention relates to method for operating and charging such an electric lock.

### STATE OF THE ART

In today's society, more and more people are moving away from manually controlled applications in various appliances, e.g. from manual locks to electric locks. However, there are great deal of disadvantages with installing and utilizing electric locks. In order supply the lock part mounted in the actual door with power, wiring is run on the outside of the door, which easily can result in wire breaks and destruction of the wiring. In order to prevent this, there is the alternative to drill a passage through the door in order to reach the lock with the wiring. This is a time-consuming and costly installation and the risk of wire breaks remains. Another option is to place strips for concealing the wiring on the outside of the door, which is not as nice either.

For example in hotels, there are locks where this problem with the wiring has been solved by providing the lock part mounted in the door with batteries, but in that case the batteries have to be regularly checked and replaced so that they do not risk running out of power while a guest is staying in the room.

Another problem presented by the electric locks of today is the lack of encrypted information transfer, which is demanded more and more.

The document WO 00/77330 discloses a door-mounted electric lock which is controlled, monitored and programmed electronically by a central station, a so-called on-line lock. Power is transferred wirelessly between one lock part in the door and the other lock part in the door frame, and data is transferred via an optical, or radio frequency link.

### BRIEF DESCRIPTION OF THE INVENTION

It is an object of the present invention to eliminate or at least minimize the above-mentioned problems, which is achieved by means of a charging and communication unit according to claim 1.

Thanks to the invention, energy and bidirectional data can be transferred inductively via a pair of coils, which provides the advantage that wiring to the part of the charging and communication unit disposed in, for example, a door can be omitted. This is advantageous in many ways, since wiring in/on a door is cumbersome and costly. With a lock comprising the charging and communication unit according to the invention, the lock insert can have the same shape as a conventional striking plate, which makes it easy for a locksmith having ready-to-use milling tools to mill a hole in a door/door frame being adapted to said lock insert for recessed installation of the lock insert. Thanks to this installation without any cords, also the problem with wear/damage to wiring on the outside of doors is avoided.

According to another aspect of the invention, it is also advantageous from an environmental point of view, since there is no need for using batteries, and less wire is used. Furthermore, deteriorated charging function due to charging pins becoming worn or oxidized is avoided.

According to yet another aspect of the invention, the charging and communication unit provides a simple way of detecting any manipulation of the lock, and can thereby transmit an alarm.

According to another aspect of the invention, the advantage is provided that a handheld unit, providing a sufficient driving current for unlocking, for example, a lock on a site without power connection, can be used.

According to yet another aspect of the invention, a capacitor is used in the wireless part, which provides a long service life and a stable operation.

According to another aspect of the invention, the advantage is obtained that no peripherals need to be used.

### BRIEF DESCRIPTION OF THE FIGURES

In the following, the invention will be described in greater detail with reference to the attached figures of the drawings, in which:
- Fig. 1: shows a block diagram of a primary circuit board according to the invention;
- Fig. 2: shows a block diagram of a secondary circuit board according to the invention;
- Fig. 3: shows a primary lock insert according to the invention;
- Fig. 4: shows a secondary lock insert according to the invention;
- Fig. 5: shows an electric lock in a door and door frame according to the invention;
- Fig. 6: shows a block diagram of a primary circuit board according to the invention;
- Fig. 7: schematically shows different signals;
- Fig. 8: schematically shows different signals; and
- Fig. 9: shows a schematic, more detailed figure of a pulse width module according to the invention.

### DETAILED DESCRIPTION OF THE FIGURES

In the disclosed solution, a preferred embodiment of the invention is described in the following figures. The charging and communication unit according to the invention is intended for interaction between two different parts. In the example described below, it is described how the charging and communication unit is interconnected with an electric lock in a vertically disposed door and an associated door frame, but it is to be understood that the invention functions equally well on doors/front doors of another type than the one described here. It should also be appreciated that the charging and communication unit can be used in other applications than electric locks, such as handheld units, e.g. barcode scanners.

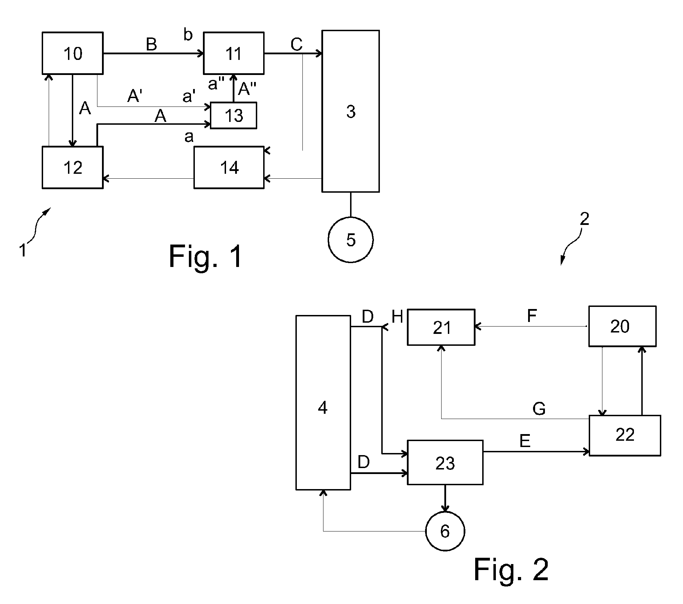

Figure 1 shows a block diagram of a primary circuit board 1 according to the invention, wherein the primary circuit board 1 comprises a first driver stage 11, a first communication module 12, a pulse width module 13, a primary coil 3, a first pulse receiving module 14 and a first processor 10. Furthermore, said primary circuit board 1 is connected to a stationary power supply 5 and is mounted in a door frame.

Figure 2 shows a block diagram of a secondary circuit board 2, comprising a secondary coil 4, a second driver stage 21, a second communication module 22, a second pulse receiving module 23 and a second processor 20. Furthermore, said secondary circuit board 2 is connected to a cell 6 such as a battery or a capacitor, and the secondary circuit board 2 is mounted in a door.

Below follows a more detailed description of what some of the different parts in the two circuit boards 1, 2 are constituted of, but it should be appreciated that also other variants are possible without taking away from the function of the electric lock.

Both the first and the second processor 10, 20 preferably have integrated hardware functions such as Timers, UART etc., in order to save space on the primary and secondary circuit board 1, 2, and in order to reduce costs.

The first and the second communication module 12, 22 comprise a standard type circuitry for modulating and demodulating bit flows, for example RS232. The communication module 12, 22 can be integrated into the processor 10, 20.

In their basic configuration, the first and the second driver stage 11,21 comprise N-channel MosFET, Mosfet driver IC, capacitors and resistors for driving the current on the generated carrier frequency through the primary and secondary coil 3, 4 in order to produce a magnetic field.

The first and the second pulse receiving module 14, 23 comprise full-wave Schottky rectifier, capacitors, resistors, optocoupler/transistor for handling the energy collected by said primary and secondary coil 3, 4.

The primary 1 and the secondary 2 circuit board also comprise a diode bridge (not shown), which diode bridge converts alternating current to direct current. Before the diode bridge, the transferred pulses for the communication are extracted in the first, alternatively the second communication module 12, 22. Otherwise the communication pulses are ruined in the rectification.

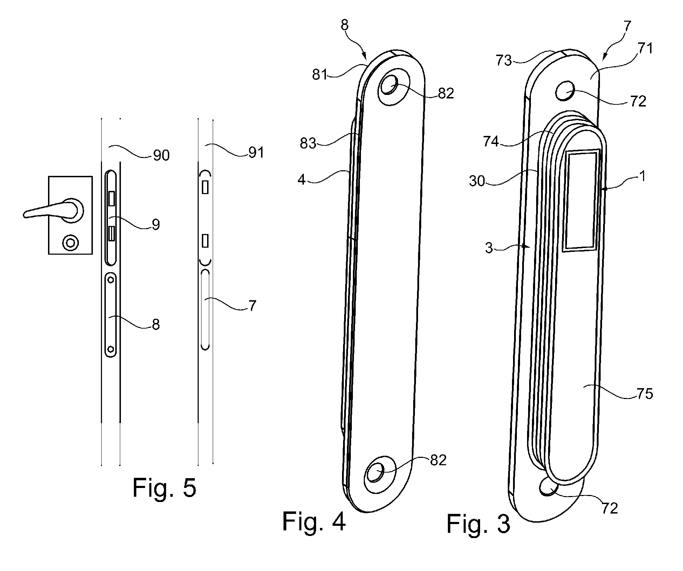

With reference to Figs. 3, 4 and 5, it will now be described how the lock device according to the invention can be mounted in a door. The design describes a preferred embodiment, and other ways of disposing the devices according to the invention are of course conceivable within the scope of the inventive idea.

Figures 3 and 4 show two interacting lock inserts 7, 8, which are to be mounted in a door and door frame, respectively. The lock inserts have a similar appearance and are disposed mirror-inverted to each other. Thus, the following description relates to both lock inserts 7, 8, even if reference is sometimes made to the lock insert being door-mounted, alternatively frame-mounted. If a specific lock insert is intended, the term primary lock insert 7 or secondary lock insert 8 is used, whereas reference to a lock insert thus refers to any one of them.

The lock insert 7, 8 preferably has the same shape as a conventional striking plate 9 (see Fig. 5), i.e. is elongated and has a planar front side, which makes it easy for a locksmith who has ready-to-use milling tools to mill a hole in a door/door frame being adapted to said lock insert 7, 8 for recessed installation of the lock insert.

In Figure 4, the front side of a lock insert is seen in a perspective view. The lock insert 7, 8 comprises a mounting plate 73, 83 having mounting holes 72, 82 for e.g. screws at each end. The front/external side of the mounting plate 73, 83 extends flush with the door frame when the lock insert 7, 8 is mounted in the door 90/door frame 91.

The back side of the lock insert 7, 8 is best seen in Figure 3. On the back/internal side 71, 81 of the mounting plate, there is a preferably elongated, protruding section 74, 84, around which the coil 3, 4 is wound. For the application described here, the coil 3, 4 is preferably constituted of copper wire, with a diameter of 0.6 mm, which has been wound 16 turns around the protrusion 74, 84. The coil has a length of 112 mm, a height of 16 mm and a width of 5 mm. The primary coil 3 in the primary lock insert 7 and the secondary coil 4 in the secondary lock insert 8 are wound in an exactly similar way and tuned so that they are in resonance with each other, i.e. the size, number of turns, thickness of wire, as well as the resistance and capacitance in the wire, are the same. Furthermore, the lock insert 7, 8 comprises the primary, respectively secondary circuit board 1, 2 to which the primary, respectively secondary coil 3, 4 is connected. The circuit board 1, 2 is preferably disposed on the planar portion 75, 85 of the protruding section. To protect the coil 3, 4 and the circuit board 1, 2, the lock insert 7, 8 preferably comprises a housing that can be mounted around the protrusion 74, 84 and its components (not shown).

Figure 5 schematically shows an electric lock according to the invention mounted in a door 90 and door frame 91. During installation, holes for the lock inserts 7, 8 are milled in the door 90 and door frame 91, respectively, and the secondary lock insert 8 is connected to the lock in the door via, for example, a small passage. The primary lock insert 7 is connected to a stationary power supply 5, disposed in connection with the door frame or in its vicinity. The two lock inserts 7, 8 are disposed substantially opposite to each other and mirror-inverted, preferably with an air gap therebetween of no more than 30 mm when the door is closed. The primary lock insert 7 preferably comprises a magnet detecting when the door is closed (not shown).

The function of the electric lock will now be described with reference to the two circuit diagrams shown in Figure 1 and 2. In the figures, the arrows represent electric signals (so-called pulse trains) which are transmitted between the outputs, respectively inputs of the different components, and the arrows indicate the direction in which the signal travels. Furthermore, a continuous arrow symbolizes command/energy transfer initiated by the primary processor 10, whereas a dashed arrow symbolizes command/energy transfer initiated by the secondary processor 20. Dashed arrows can also be said to symbolize a standby mode.

In addition to transmitting/receiving data, the primary circuit board 1 (see Figure 1) in the door frame 91 has the task of generating a pulse train C, which is transmitted to the primary coil 3 in order to produce a magnetic field, which inductively transfers energy and data to the secondary coil 4 in the door 90. The secondary circuit board 2 has the task of converting the inductively generated signal from the secondary coil 4 to data and energy and of processing and responding to the data being transferred.

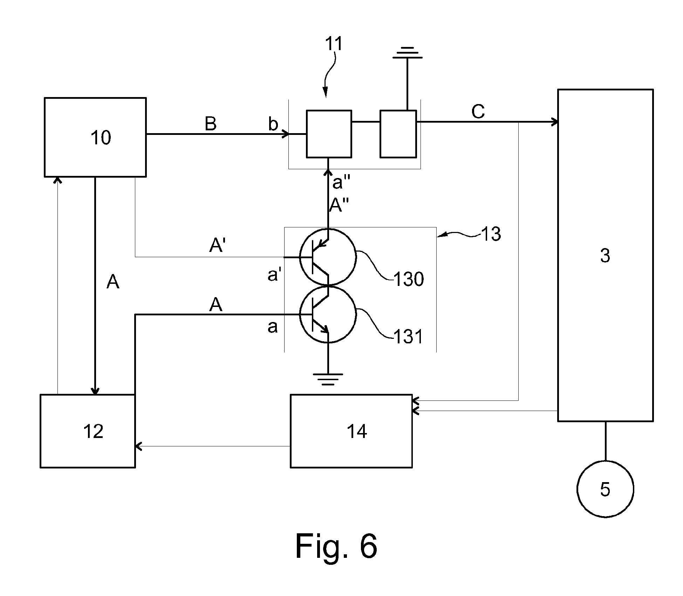

The first processor 10 generates a pulse-width modulated signal B, intended for energy transfer to a first input b on a first driver stage 11 and intended as a carrier wave for the data communication. The pulse-width modulated signal B is a DC voltage and preferably has a fixed frequency with a voltage amplitude tuned to the characteristic (in this case 12 V DC) of the primary coil 3. The processor 10 also transmits a pulse train A intended for data communication to a first input a of a pulse width module 13, possibly via an external communication module 12 for modifying the pulse train A from parallel to serial communication if such a unit is not integrated into the processor 10. In parallel with the pulse train A, also a bypass-signal A' is transmitted from the processor to a second input a' of the pulse width module 13, which signal is superior to the pulse train A so that an output signal A" from the pulse width module 13 to a second input a" of the first driver stage 11 is adapted in order to achieve different operating modes of the lock device (see Figure 6 and the description of different operating modes further below). The output signal A" from the pulse width module 13 is used for (ON/OFF) control of the output of the first driver stage 11 to the primary coil 3 at a frequency determined by the data communication and is thus varying continuously. From the output of the first driver stage, a magnetic field inducing signal/ a pulse train C, which is a result of the action by the signal A" from the pulse width module 13 on the pulse-width modulated signal B from the processor 10, is sent to the primary coil 3. In the primary coil 3, a magnetic field is generated, the strength of which is determined by the current transmitted through the coil from the stationary power connection 5 and the frequency of the pulse train C. The signal being transferred from the primary coil is a simulated AC voltage.

The induced signal D is collected at each end of the secondary coil 4 and is transmitted to a respective input of a second pulse receiving module 23 on the secondary circuit board 2. In the pulse receiving module 23, the voltage level of the signal D is rectified and adapted. From the pulse receiving module 23, a pulse train E intended for data communication is transmitted to the second processor 20, possibly via an external secondary communication module 22 for modifying the pulse train E from serial to parallel communication if no such unit is integrated into the processor 20. From the second pulse receiving module 23 is also inductive energy collected for charging an electric cell 6 which can be a battery, but is preferably a capacitor, for driving the components in the second circuit board 2.

The secondary circuit board 2 has its receiving second communication module 22 connected to the terminals of its secondary coil 4 in order to be capable of receiving the communication generated inductively by the primary circuit board 1, at the same time as the inductive energy, in its turn, charges the cell 6 connected to the secondary circuit board 2. In order to enable the secondary circuit board 2 to respond to the data received from the primary circuit board 1, a second driver stage 21 and the second processor 20 are coupled just like the primary circuit board 1. In order to enable the primary circuit board 1 to receive data, it is coupled like the secondary circuit board 2, with the exception of the cell 6. Thus, by this method, it is possible to charge and communicate inductively between the primary 1 and the secondary 2 circuit board via the respective coil 3, 4. It is thus possible to inductively transfer bidirectional data communication between said circuit boards 1, 2. The second processor 20 generates two signals, which are connected to the second driver stage 21. On the one hand, a pulse-width modulated signal F intended as a carrier wave for the data communication, and, on the other hand, a pulse train G, via the second communication module 22, intended for the data communication used for controlling the output of the second driver stage 21 for modulating the response signal H which, via the secondary coil 4, is transferred to the primary circuit board 1. In order to enable the primary circuit board 1 to receive data, there is a first pulse-receiving pulse width module 14 which, in a corresponding way as in the secondary circuit board 2, receives the signal H from both ends of the primary coil 3. The first pulse-receiving pulse width module 14 rectifies the signal H and transmits it further to the first processor 10 via the first communication module 12. The purpose of the signal H from the secondary circuit board 2 is only to transfer data communication from the secondary circuit board 2, and therefore the energy in this signal can be kept on a low level. This means that a very small capacity of the electric cell 6 in the secondary circuit board is sufficient. In addition to this, the cell 6 should have the capacity to operate the lock during a door opening operation. Furthermore, this means that monitoring of any intrusions is facilitated, since only a small manipulation of the door/lock means that the response signal from the secondary circuit board 2 is disturbed, which becomes a trigger signal for intrusion.

Thus, by this method, it is possible to transmit communications in both directions inductively, via the respective coil 3,4, between the primary 1 and the secondary 2 circuit board, at the same time as the secondary circuit board 2 is charged with electrical energy.

A number of different operating modes will now be described with reference to Figures 6, 7 and 8.

As mentioned above, the first processor 10 generates a pulse-width modulated signal B intended for energy transfer to a first input b of a first driver stage 11. Generally, it can be said about energy transfer by means of pulse width modulation (PWM) that the pulse train B being generated is a square wave consisting of one part where the pulse is high, ON, and one part where the pulse is low, OFF. The power of the pulse-width modulated signal B can be increased or decreased by varying the distribution between ON and OFF, i.e. the duty cycle, and the more the ON share is increased, the higher power is obtained from the pulse train. For example, with 10 % ON and 90 % OFF, only small power is achieved, while if 100 % ON, maximum power is achieved.

### Energy transfer combined with data communication

Through development work, the applicant has developed a lock in which it has become possible to combine inductive transfer of energy with data communication, something which, insofar as the applicant knows, has not been done before. To enable the transfer of energy as well as data to work, a fixed frequency is used, and with a voltage amplitude tuned to the primary 3 and secondary 4 coil so that the two coils 3, 4 get in resonance with each other. In this way, a high efficiency/transfer function is obtained, which cannot be achieved if different frequencies are used. The maximum charging versus best speed and best range for communication/data transfer is obtained at 50% ON and 50% OFF. At 50% ON and 50% OFF, a pulse train B to the first input b of the first driver stage 11 is obtained where each pulse consists of one subpulse of 50% ON and one subpulse of 50% OFF. In this case, the pulse-width modulated signal B is a DC voltage of 230 kHz, 12 V DC. If the characteristics of the coils are changed so that resonance arises at a higher frequency, this means that the speed of the data transfer can be increased.

The pulse-width modulated signal B is always subordinate to the signal from the first pulse width module 13, i.e. the pulse train A", which means that the pulse-width modulated signal B is modulated further by the communicating pulse train A", so that the output signal C from the first driver stage 11 has an appearance consisting of a pulse train with an appearance according to A", but where the ON pulses, in addition, have a 50/50 characteristic in accordance with the signal B.

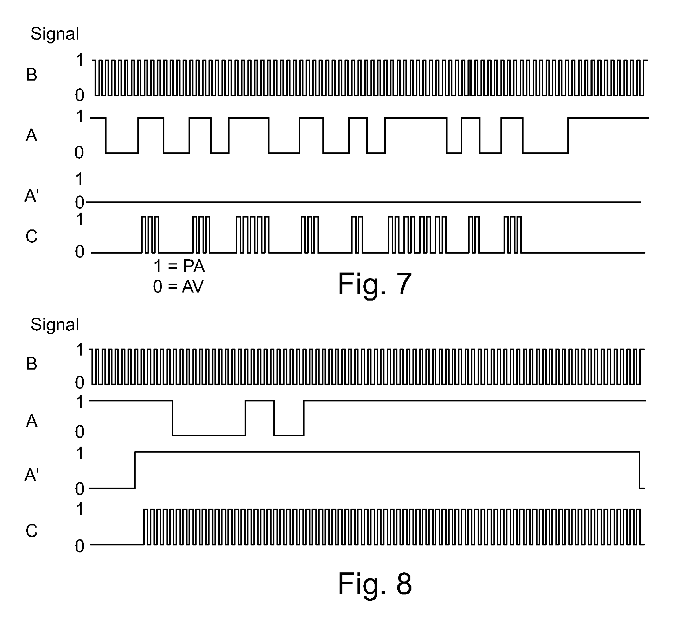

The pulse train A", in its turn, is a result of the modulation, if any, of the data communication signal A by the bypass signal A'. If it is desired to transfer energy and data, the bypass signal A' is set naturally low in a second one 130 of two transistors connected in series in the pulse width module 13, wherein the data communication signal A passes unaffected through the first pulse width module 13 via the first one 131 of the two transistors connected in series (see Figure 6). The output pulse train A" is thus identical to the data communication signal A, i.e. A = A" during data transmission, which is shown in Figure 7 where the pulse train A has been modulated for transmitting data information (the pulse train shown corresponds to a character, e.g. a letter), and wherein the output signal C has the same characteristic, but the respective ON pulse in the pulse train has a 50/50 characteristic in accordance with the signal B.

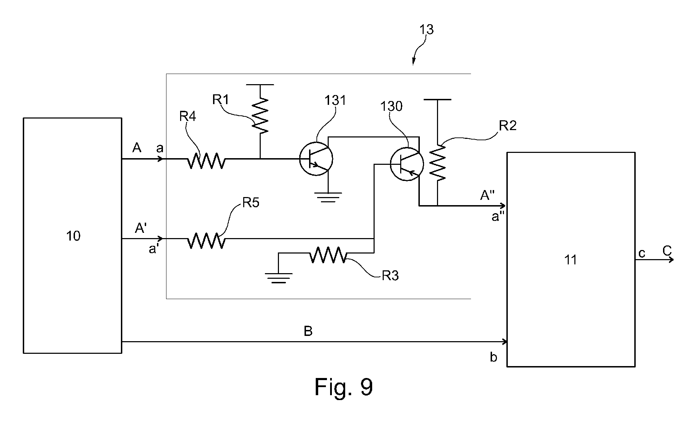

In Figure 9, a more detailed figure of the first pulse width module 13 is seen, which comprises said first transistor 131 (which is a NPN transistor) and said second transistor 130 (which is a PNP transistor) as well as 5 resistors R1, R2, R3, R4 and R5. The position of the resistor R2 is dependent on the make and type of "Mosfet Driver IC". In the shown example, a MCP14E4, from Microchip, with weak pull-up only on the enable pin is used. The resistor R2 helps the "Mosfet Driver IC" to run high, since the internal resistance connected to the plus voltage is not capable of pulling the enable pin high on its own, when the second PNP transistor 130 is closed. The values of the resistors R1, R2, R3, R4 and R5 are dimensioned based on the characteristics of the two transistors 131 and 130, as well as the 'Mosfet Driver IC', and the respective characteristics differ between makes and model numbers and therefore also the resistance values may vary. Their positioning is obvious to a skilled person. The majority of them are pure pull-up/pull-down and the rest are serial resistors (R4,R5) limiting the current to the base of the transistors 130, 131.

If it is desired to transfer energy and data, as described above, the bypass signal A' is set to a low state, which then allows current to flow through the second transistor 130 from emitter to collector. The first transistor 131 is controlled by the data communication signal A, so that when the data communication signal A is high (ON), current flows also through the first transistor 131, from collector to emitter. Since the emitter of the first transistor 131 is connected to a common ground/0 V with the second transistor 130, the second input a" of the first driver stage will be pulled low each time the data communication signal A is high (ON), and thereby closes the output c of the first driver stage. On the other hand, each time the data communication signal A is low (OFF), the second input a" of the first driver stage is pulled high, since there is then no connection to common ground/0 V. This results in the second input a" of the first driver stage 11 being pulled high by the resistor R2, whereupon the pulse-width modulated signal B entering the first input b of the first driver stage also leaves the output c of the first driver stage. In this way, the data communication signal A controls the output signal A" from the first pulse width module 13 via the first 131 and the second 130 transistor, and the output signal C from the first driver stage 11 is then subordinate to the data communication signal A.

Accordingly, during data communication, the pulse-width modulated signal B is modulated by the pulse train A" at the rate of the pulse train A". The pulse-width modulated signal B thus always has a carrier frequency of 50% ON and 50% OFF, but the signal B is then modulated further by the signal A" in that the signal A" controls the output c of the first driver stage 11 to the coil 3. If data is transmitted, more pulse trains with 50/50% are obtained, and if little data is transmitted, fewer pulse trains with 50/50% are obtained, which means that the more data transmitted, the more energy can be transferred. Accordingly, the energy transfer is to a certain extent proportional to the amount of data being transferred. In addition, the energy transfer is also proportional to the data in question in that the respective characters have different configurations of ON pulses and OFF pulses, respectively. The signal C has a 50/50 characteristic in the ON pulses, but due to the characteristics of the two coils (the inductance of the coil together with a capacitor mounted in parallel over the coil, a so-called LC coupling or resonance circuit), a signal D is obtained from the secondary coil 4, where the 50/50 characteristic has been eliminated so that the signal D is substantially similar to the signal A in the energy transfer and data communication mode, i.e. D ≈ A (according to Figure 7), or is similar to the signal A', i.e. D ≈ A', in the quick charging mode.

### Quick charging

After opening a door having an electric lock according to the invention, a quick charging of the cell 6 is carried out and is then performed at 100% ON (in this described example about 5 s), consequently no data is transmitted to the primary coil 3 then. In order to enable the possibility of quick charging the cell 6, the data communication A is bypassed via the signal A' in the first pulse width module 13. After quick charging, the cell 6 is fully charged. If only transfer of energy is desired, the bypass signal A' is set naturally high, wherein the low OFF subpulses of the data communication signal A "disappear" and are replaced with ON pulses in the second transistor, i.e. A" = A'. The output pulse train A" becomes identical to the bypass signal A', i.e. 100% ON, which is shown in Figure 8. If no data communication takes place, the signal C to the primary coil 3 obtains a power corresponding to 50% ON and 50% OFF, see Figure 8. Preferably, this operating mode will only be of interest when it is desired to quick charge the cell 6 in the secondary circuit board 2, whereas data communication preferably occurs continuously at all other times, among other things with the purpose of maintenance charging the cell 6, but also for monitoring the operation of the lock and ensuring that intrusion attempts/manipulation do not occur between periods of normal data communication with the purpose of locking/unlocking the lock.

With reference to Figure 9, the second transistor 130 is closed during quick charging, since the bypass signal A' is high so that no current passes from emitter to collector in the second transistor 130. This results in the second input a" of the first driver stage being left floating and interpreted internally as high in the first driver stage 11, whereupon the pulse-width modulated signal B entering the first input b of the first driver stage also leaves the output c of the first driver stage. Thus, in this state, the data communication signal A cannot control the second input a" of the first driver stage, and the output signal C from the first driver stage 11 looks like the pulse-width modulated signal B.

The electric lock comprises a magnet detecting when the door is closed, and as soon as the door is closed communication is transmitted continuously, except during quick charging, in order to detect any manipulation. The data being transferred can be anything, e.g. information about what is happening in the door, the position of the locking bolts, whether the door is closed, etc. The data information being transferred between the two coils 3, 4 is encrypted, and the actual encryption takes place in the first 10 or the second 20 processor via an encryption key present in the two processors 10, 20. Accordingly, the actual encryption key is not attached, but the data is transmitted encrypted and is then decrypted in the receiving processor 10, 20. In laboratory scale, it has been possible to perform tests with a magnet in the lock insert without noticing any substantial influence from the magnet, but it is appreciated that if it should turn out to reduce the power substantially, the lock insert will be made longer so that the distance between the magnet and the coil is increased.

Communication between the primary 1 and secondary 2 circuit board occurs regularly according to the so-called "master-slave polling" system. The primary circuit board 1 (master) will transmit data to the secondary circuit board 2 (slave), and the secondary circuit board 2 only responds when the primary circuit board 1 demands it. When the secondary circuit board 2 is to respond is determined depending of the type of message, e.g. the primary circuit boards 1 transmits "do you need quick charging" and when the secondary circuit board 2 receives this, it is programmed to respond. At the same time, the primary circuit board 1 knows that it should get a response from the secondary circuit board 2, and thereby shuts down all charging to prevent collisions from occurring. When the primary circuit board 1 has received a response, depending on the response it returns to quick charging or to transmitting non-essential data to thus achieve maintenance charging.

The charging and communication unit according to the invention provides a possibility to get information that somebody tries to manipulate the lock (intrusion) in a simple way. By regularly transmitting information about the voltage levels in the secondary circuit board 2, the unit can detect voltage changes, e.g. if somebody inserts a piece of sheet metal into the air gap between the primary 1 and the secondary 2 circuit board , since the piece of sheet metal steals magnetic field. In that case the electric lock has to run some quick charging pulses because, since the sheet metal steals magnetic field, quick charging has to be performed in order to maintain the charge in the cell 6, in this described example 5 V, to ensure that the cell 6 is not discharged, which triggers an alarm signal.

As a rule, the first pulse receiving module 14 on the primary circuit board 1 is in a standby state to avoid collisions and malfunctions, and is only connected up when data is received from the secondary coil 4.

When the electric lock is in operation and the secondary circuit board 2 has received a valid signal for door opening, the door can be opened. When opening the door, energy is drawn from the cell 6 and, in the described example, the cell 6 is capable of one door opening (i.e. of controlling the mechanics allowing unlocking and locking of the lock), to thereupon be charged up by performing a quick charging when the door is once again closed. Once the quick charging is finished, also data will start to be transferred, and simultaneously the cell 6 is maintenance charged. When the contact between door and door frame is interrupted (after having received a valid opening signal), everything is shut down in order to save energy, and when, for example, a magnet detects that the door is once again closed, a quick charging, in this case of about 5 s, is performed and the door can then be opened again. The quick charging function is an important part, since it is the charged cell 6 which drives the lock. The quick charging function is enabled owing to the use of a capacitor, and thanks to the use of a capacitor, a longer service life of the cell 6, and a more stable operation, are achieved.

The distance between the primary 1 and the secondary 2 circuit board is advantageously no more than 30 mm for best results of the inductive transfer. Should any object disturbing the magnetic field enter therebetween, an alarm is set off so that manipulation of the lock is extremely difficult, since an alarm is set off as soon as the communication between the two circuit boards 1, 2 is interrupted,. Only with the correct opening signal, it is possible to open the door, and encrypted data transfer in locks is demanded more and more.

It should be understood that the voltage range for high or low signal is depending on the operating voltages used internally on the circuit board, which means that the voltage level for high and low, respectively, therefore can vary depending on IC circuits, regulators, etc.

### ALTERNATIVE EMBODIMENTS

The invention is not limited to what has been described above, but can be varied within the scope of the following claims. For instance, it will be appreciated that the primary 7 and the secondary 8 lock insert can have other shapes than what has been described here. For instance, the lock inserts can be longer and thereby the coils can be wound so that they become longer and thereby transfer more energy.

Furthermore, the skilled person will appreciate that the different components can have positions alternative to the ones shown in the figures, and that the values of the resistors can be dimensioned based on the characteristics of the transistors, without taking away from the inventive idea for that reason.

In the described electric lock, preferably a solenoid lock, locking the door when the door slams shut, is used. If a door having the electric lock according to the invention stands open a whole day, so that the cell 6 is completely discharged, a quick charging is initiated as soon as the door has closed shut. The first time a lock according to the invention is taken into use, or if the cell 6 has been completely discharged, a quick charging of about 13 s is needed before the lock can be taken into use again. This is great advantage, making it advantageous to use this lock in unoccupied or infrequently visited sites, which also may be exposed to moisture and cold, e.g. a mast. If a lock according to the invention is installed at the mast, there is a possibility that the part to be mounted in the door frame is provided in a handheld unit, which the technician needing access to the mast brings along. The handheld unit is then placed against the lock, so that resonance arises between the coil in the lock and the coil in the handheld unit, and quick charges it during the time period required for transferring sufficient energy to the cell of the lock in order to be capable of opening the lock (in the described example about 13 s). Thus no batteries or keys are needed to get access, and it is not quite so easy for an unauthorized person to manipulate the lock, since both encryption and resonance have to be achieved.

The skilled person will also appreciate that it is very advantageous to have a lock according to the invention in sites where it might be difficult to replace batteries, or where it is impossible to have wiring.

Another alternative embodiment is to dispose some kind of housing accommodating the coil alongside the rim of the housing at the handle so that, when the door is closed, the coil is positioned right opposite the door frame where the second coil is located. The other parts of the lock are then placed inside the housing, and in this embodiment there is no need to damage the door at all.

It is also very advantageous to connect the electric lock to an access control system, to make sure that only authorized personnel can unlock it.

It will also be appreciated that, instead of a magnet, some other form of sensor mechanism could be used, e.g. an optical or a mechanical one.

The skilled person will also appreciate that an alternative embodiment could be that the electric lock comprises rechargeable batteries, which, however, do not provide the same advantages as using capacitors.

## Claims

1. A charging and communication unit, comprising a primary circuit board (1) and a secondary circuit board (2), said circuit boards (1, 2) being disposed in a respective one of two interacting parts (90, 91) of a device, said parts (90, 91) being movably disposed relative to each other, wherein a first part (91) is supplied with power by an external source, whereas a second part (90) is inductively supplied with power via said first part (91), wherein said primary circuit board (1) interacts with a primary coil (3) and said secondary circuit board (2) interacts with a secondary coil (4) for inductive transfer of electrical energy between the circuit boards (1, 2) via said primary (3) and secondary coil (4), **characterized in that** said primary (3) and secondary coil ( 4) are also arranged to inductively transfer bidirectional data communication between said circuit boards (1, 2).

2. The charging and communication unit according to claim 1, **characterized in that** said primary circuit board (1) further comprises a first driver stage (11), as well as a first pulse width module (13) and a first processor (10) for generating a pulse train (C) comprising electrical energy and data to the primary coil (3) and receiving a response signal (H) comprising data from the secondary coil (4).

3. The charging and communication unit according to any one of the preceding claims, **characterized in that** said secondary circuit board (2) further comprises a second driver stage (21), a second pulse width module (23) and a second processor (20) for receiving an induced signal (D) comprising electrical energy and data from the second coil (4) and generating said response signal (H).

4. The charging and communication unit according to claim 2 and 3, **characterized in that** the electrical energy in the induced signal (D) drives the components in the secondary circuit board (2) and that a subset of the energy is stored in a cell (6), preferably a capacitor, for use when generating the response signal (H) and operating, if any, of mechanical components in the second part (90).

5. The charging and communication unit according to claim 2, **characterized in that** the pulse train (C) is a result of the action of a control signal (A"), from the first pulse width module (13), on a pulse-width modulated signal (B) having a duty cycle (ON/OFF) of 50/50 intended for energy transfer as well as a carrier wave for the data communication from the processor (10), wherein the control signal (A"), in its turn, is a result of the modulation, if any, of a data communication signal (A) from the first processor (10) by a bypass signal (A').

6. The charging and communication unit according to claim 5, **characterized in that** the first pulse width module (13) comprises two transistors (130, 131) connected in series, wherein the first transistor (131) is a NPN transistor and is controlled by the data communication signal (A) from the circuit board (10), wherein the second transistor (130) is a PNP transistor and is controlled by the bypass signal (A') from the processor (10).

7. The charging and communication unit according to claim 5, **characterized in that** the control signal (A") controls the output (c) of the first drive stage (11) to the primary coil (3), whereby the pulse-width modulated signal (B) from the processor is modulated further via the action of the control signal (A") on the output (c).

8. The charging and communication unit according to claim 5, **characterized in that** the output pulse train (A") is identical to the data communication signal (A) when transferring energy and data, i.e. A" = A during energy and data transfer, and the output signal (C) has the same characteristic as the data communication signal (A), but with a duty cycle of 50/50 in the ON-pulses in accordance with the characteristic of the pulse-width modulated signal (B) from the processor (10).

9. The charging and communication unit according to claim 5, **characterized in that** the output pulse train (A") is identical to the bypass signal (A') when quick charging the cell (6) in the second circuit board (2,), i.e. A" = A' during energy transfer alone, and the output signal (C) is identical to the pulse-width modulated signal (B) from the processor (10).

10. The charging and communication unit according to claim 8 or 9, **characterized in that** the characteristics of the two coils (3, 4) influence the signal (C) during the transfer therebetween so that an induced signal (D) from the secondary coil (4) to the circuit board (2) has a characteristic where the 50/50 characteristic in the ON pulses has been eliminated so that the induced signal (D) is a simulated AC voltage, which is substantially similar to the signal (A) in the energy transfer and data communication mode, i.e. D ≈ A, or is similar to the signal A', i.e. D ≈ A', in the quick charging mode.

11. The charging and communication unit according to claim 10, **characterized in that** the induced signal (D) is collected at each end of the secondary coil (4) and is transmitted to a respective input of a second pulse receiving module (23) on the secondary circuit board (2), wherein the voltage level of the induced signal (D) is rectified and adapted and transmitted further in the form of a pulse train E intended for data communication to the second processor 20, and wherein a subset of the energy in the signal (D) is transmitted from the second pulse receiving module (23) to the cell (6).

12. The charging and communication unit according to any one of the preceding claims, **characterized in that** said data communication is encrypted.

13. An electric lock, **characterized in that** it comprises a charging and communication unit according to any one of the claims 1 - 12.

14. The electric lock according to claim 13, **characterized in that** said primary circuit board (1) and primary coil (3) are disposed in a first lock insert in a door frame (91), and that said secondary circuit board (2) and secondary coil (4) are disposed in a second lock insert in a door (90), wherein the lock inserts are mounted substantially opposite to each other with an air gap therebetween of preferably no more than 30 mm when the door is closed, and preferably comprising a magnet detecting when the door is closed.

15. A method for operating and charging an electric lock in a door according to any one of the claims 13-14, wherein the method comprises the following steps:
a) detecting, via a sensor, whether the door is open or closed;
b) when the door has been closed, quick charging of the cell (6); followed by
c) energy and data transfer between the circuit boards (1, 2) via the coils (3, 4), while repeatedly detecting the position of the door according to step a); and preferably also
d) transmitting information about the voltage levels in the secondary circuit board (2) with the purpose of indicating manipulation of the electric lock in case of voltage drop; and in such a case
e) transmitting an alarm signal.
